# DEMANDE DE BREVET EUROPEEN

(11) **EP 4 273 488 A2**
(43) Date de publication de la demande: **08.11.2023**
(21) Numéro de dépôt: 23184073.7
(22) Date de dépôt: 26.04.2021
(51) Int. Cl.: F27D 99/00

(54) **FOUR À FORT RENDEMENT ÉNERGÉTIQUE**

(30) Priorité: 30.04.2020 FR 2004299
(62) Demande divisionnaire de: 21731233.9
(71) Demandeur: SAINT-GOBAIN ISOVER, 92400 Courbevoie (FR)
(72) Inventeur: DUPEUX, Guillaume, 75014 PARIS (FR); VISPO, Antony, 60700 LES AGEUX (FR); MARTIN, Alexandre, 95680 MONTLIGNON (FR); CHESNEL, Sébastien, 16000 ANGOULEME (FR)
(74) Mandataire: Saint-Gobain Recherche

(57) **Abrégé**

L'invention concerne un une installation 1 pour la fusion d'une composition de matières premières, adaptée à l'obtention de laine de verre, de fils de verre textile et/ou de verre plat, qui comprend une chambre de fusion 2 équipée d'au moins un brûleur 3 de type immergé, caractérisée en ce que la chambre de fusion 2 est définie par des parois latérales 4 en matériau réfractaire et une sole 5 métallique nue parcourue d'un réseau de conduites adaptées pour la circulation d'un fluide de refroidissement, préférentiellement de l'eau.

## Description

La présente invention concerne une installation pour la fusion d'une composition de matières premières adaptée à l'obtention de fibres de verre du type laine minérale d'isolation thermique ou phonique, de fils de verre textile dits de renforcement, et/ou de verre plat.

Dans le présent texte, ces « matières premières » englobent le sable silicique, mais également tous les additifs (carbonate de sodium, calcaire, dolomie, alumine...), les déchets (incluant des fibres minérales) qui peuvent être issus de la production desdites fibres ou de chantiers (construction ou déconstruction), tous les combustibles liquides ou solides éventuels (plastique de matériau composite ou non, matières organiques, charbons), et tout type de calcin. Sont également inclus des matériaux recyclables contenant des éléments combustibles (organiques) tels que par exemple, les fibres minérales ensimées, avec liant (du type de celles utilisées dans l'isolation thermique ou acoustique ou de celles utilisées dans le renforcement de matière plastique), les vitrages feuilletés avec des feuilles de polymère du type polyvinylbutyral tels que des parebrises, des bouteilles en verre (calcin ménager), ou tout type de matériau " composite " associant du verre et des matériaux plastiques tels que certaines bouteilles. Sont également recyclables les " composites verre-métal ou composés métalliques " tels que vitrages fonctionnalisés avec des revêtements contenant des métaux, jusque-là difficiles à recycler car cela risquait d'entraîner un enrichissement progressif de la chambre de fusion en métaux, engendrant une production de silicium métallique dans le bain de verre. Mais le brassage imposé par la fusion selon l'invention permet d'éviter cette sédimentation, et ainsi de recycler, par exemple, des vitrages revêtus de couches d'émail, de couches de métal et/ou de différents éléments de connectique. Dans la description, les expressions « verre liquide » et « bain de verre » désignent le produit de la fusion de ces matières vitrifiables.

L'invention concerne plus particulièrement une installation (four) dit « à brûleur(s) immergé(s) ». De tels brûleurs sont alimentés en gaz et en air, et généralement disposés de manière à affleurer au niveau de la sole de la chambre de fusion, de façon à ce que la flamme se développe au sein même de la masse des matières premières en cours de liquéfaction. Ces brûleurs peuvent être tels que leurs conduits d'amenée des gaz affleurent la paroi qu'ils traversent. Selon certains modes de réalisations, on peut choisir de n'injecter que des gaz issus de la combustion, cette dernière étant alors réalisée hors de la chambre de fusion à proprement dite.

Dans ce contexte, il est connu de mettre en oeuvre des fours à brûleur immergé dont la sole et les parois latérales sont constituées de matériaux réfractaires.

Dans l'ensemble de la description, et conformément aux normes ISO/R836 ou AFNOR NF B 40-001, on désigne par matériaux « réfractaires » les matières et produits autres que les métaux et alliages (sans que soient exclus ceux contenant un constituant métallique), dont la résistance pyroscopique est équivalente à 1500 °C au minimum. Cette définition signifie que les matériaux réfractaires doivent résister à 1500 °C au minimum sans ramollir et sans s'affaisser sous leur propre poids selon la norme du test de résistance pyroscopique.

Les parois et sole en réfractaire ont pour avantage de présenter une très bonne isolation thermique, et donc une consommation énergétique raisonnable. Elles ont en revanche pour inconvénient d'être fragiles et peu modulables. A titre d'exemple, l'inclusion et la fixation de différents éléments sur la sole (brûleurs, bouillonneurs) est rendu difficile par l'épaisseur de réfractaire, de l'ordre de 20 à 40 centimètres.

A noter de plus que des fours à brûleurs immergés équipés de telles parois en matériaux réfractaires ne sont pas adaptés pour la production de laine de roche. La fusion de roche (basalte ou laitier de hauts fourneaux) nécessite en effet un chauffage des matières premières à des températures voisines de 1500 °C qui sont significativement plus élevées que pour la fusion du verre ordinaire, et auxquelles résistent difficilement les réfractaires classiques. Ajouter à cela une très forte agitation du bain de roche en fusion, en raison de l'agencement des brûleurs sous la surface de ce dernier, et une plus grande fluidité de la roche en fusion, en comparaison du verre en fusion. Ces différents facteurs contribuent à accentuer les mécanismes de corrosion au niveau des parois du four.

Certes, il existe des réfractaires à haute performance ayant la capacité de résister un temps à de telles contraintes physiques. Cependant, les coûts très élevés liés à la mise en oeuvre de tels réfractaires interdisent toute utilisation de ces derniers pour la production de laine de roche, via des fours à brûleurs immergés.

Pour toutes ces raisons, les fours à brûleurs immergés équipés de parois en matériaux réfractaires ne sont pas adaptés pour la fusion de laine de roche.

Selon une approche alternative, il est connu de mettre en oeuvre des fours à brûleur immergé dans lesquels les parois latérales et la sole sont constituées de plaques métalliques parcourues d'un réseau de conduites adaptées pour la circulation d'un fluide de refroidissement (dit « water jacket » en langue anglaise). De telles plaques métalliques présentent l'avantage d'être facilement démontables et remplaçables et ont une grande durée de vie au contact de verres chaud et fluide.

De telles parois water jacket présentent cependant plusieurs inconvénients. A titre principal, elles absorbent beaucoup d'énergie et engendrent ainsi une très forte consommation énergétique du four ce qui, dans un contexte industriel d'économie d'énergie, justifie en soi que l'utilisation de ces parois water jacket soit à ce jour strictement limitée au domaine de la production de laine de roche, dans lequel les performances des parois en réfractaires traditionnels font défaut.

De manière complémentaire, il convient de préciser que ces parois de type water jacket présentent un certain nombre d'inconvénients supplémentaires qui sont spécifiques à une hypothétique mise en oeuvre pour la production de laine de verre. Le bain de matières premières en fusion nécessaire à une telle production a pour particularité de présenter une couleur très claire, d'où son surnom de bain de « verre clair ».

Un tel bain de verre clair se distingue d'abord d'un bain de roche en fusion par l'intensité plus grande des transferts radiatifs qu'il permet. En comparaison avec un bain de roche en fusion, un bain de verre clair transmet ainsi, par rayonnement, une plus grande quantité de chaleur aux parois du four. Ceci accroît donc davantage la consommation énergétique des parois de type water-jacket, renforçant plus encore un inconvénient déjà identifié comme rédhibitoire pour l'utilisation de parois water jacket pour la fusion de verre clair.

Un bain de verre clair se distingue de plus d'un bain de roche de par sa moins grande propension à dévitrifier. Or, dans le cas d'un bain de roche, la formation d'une couche dévitrifiée à l'interface entre les parois de type water-jacket et le bain de verre permet justement de mieux protéger ces parois, en particulier contre la corrosion induite par le bain de roche. Une telle couche dévitrifiée ayant plus de difficultés à se former dans le cas d'un bain de verre clair, les parois water-jacket sont alors plus exposées à la corrosion par le verre et présentent donc une durée de vie réduite.

Pour ces raisons au moins, l'utilisation de telles plaques métalliques de type water-jacket est à ce jour considérée comme particulièrement inadaptée à la production de laine de verre.

L'invention vise à fournir une solution technique aux inconvénients décrits ci-dessus. Plus particulièrement, dans au moins un mode de réalisation, la technique proposée se rapporte à une installation pour la fusion d'une composition de matières premières, adaptée à l'obtention de laine de verre, de fils de verre textile et/ou de verre plat, qui comprend une chambre de fusion équipée d'au moins un brûleur de type immergé, caractérisée en ce que la chambre de fusion, préférentiellement de forme cylindrique, est définie par des parois latérales en matériau réfractaire selon les normes ISO/R836 ou AFNOR NF B 40-001 et une sole métallique nue à laquelle est fixé ledit brûleur et qui est parcourue d'un réseau de conduites adaptées pour la circulation d'un fluide de refroidissement, préférentiellement de l'eau.

Dans la présente description, la sole métallique est dite « nue » en ce qu'elle n'est pas protégée par des matériaux réfractaires interposés entre elle et le verre en fusion.

Confronté aux inconvénients identifiés dans l'état de la technique, les inventeurs ont dans un premier temps lancé un programme de recherche poussé afin d'analyser, pour différentes configurations de four, les mouvements de convection du verre en fusion au sein du four, les échanges thermiques intervenant entre le verre en fusion et chacun des éléments constituant les parois, la voûte et la sole du four, l'usure résultante de chacun de ces éléments, et les rendements énergétiques obtenus par le four pour chacune des configurations envisagées. Ces analyses ont été conduites tant sur la base d'essais empiriques réalisées sur fours pilotes que via des simulations informatiques.

Ces analyses ont notamment permis de mettre en évidence qu'à proximité des flammes des brûleurs, une sole en réfractaire s'use significativement plus vite qu'une sole métallique de type water jacket en raison des forts mouvements de convection et de la température particulièrement élevée du verre en fusion. Pour des raisons de durabilité de la sole, et donc du four, le choix d'une sole métallique de type water jacket est donc à privilégier.

Par contraste, les parois du four sont moins attaquées par le verre en fusion que la sole, d'où une usure modérée dans le temps de parois réfractaires positionnées à cet endroit. Or, ces parois latérales représentent une part significative de la surface totale d'échange du four avec le bain de verre, dite également « surface contact verre » dans la suite de la description. La mise en oeuvre de réfractaires à cet endroit, en comparaison avec des parois métalliques de type water jacket, permet donc de limiter les déperditions thermiques et d'accroître le rendement énergétique du four, pour une durée de vie acceptable.

Sur la base de ces conclusions, un four selon l'invention constitue une solution hybride présentant les avantages liés à chacune des solutions techniques connues de l'état de la technique, sans les inconvénients qui y sont inhérents. Pour ce faire, un four selon l'invention combine habilement entre eux les éléments les plus performants de chacune de ces solutions afin d'obtenir un four présentant à la fois un bon rendement énergétique et une durabilité satisfaisante.

A noter qu'une telle hybridation n'est en rien évidente, puisqu'elle résulte de la sélection et de la combinaison d'éléments présents dans des solutions techniques a priori antagonistes, sur le fondement d'un programme abouti de recherche visant identifier et comprendre les mécanismes physiques intervenant au sein du four et impactant son rendement énergétique et sa durabilité.

Enfin, en l'absence de toute incitation extérieure, la complexité technique et le coût de développement d'une nouvelle solution de four constituent un préjugé technique supplémentaire à surmonter pour aboutir à l'invention.

Selon un mode de réalisation particulier, ladite sole métallique est fixée de manière amovible auxdites parois latérales.

Dans l'ensemble de la description, le terme « amovible » qualifie une fixation réversible, sans détérioration des pièces fixées entre elles. Par opposition, la soudure de deux pièces entre elles est considérée comme une fixation irréversible.

Lors de la maintenance du four, il est ainsi possible de ne remplacer que la pièce défectueuse, l'autre pièce étant quant à elle réutilisable. En général, cette pièce premièrement défectueuse est la sole métallique puisque c'est elle qui subit le plus intensément la corrosion provoquée par le verre liquide. Un four selon l'invention présente donc une durée de vie significativement accrue. La production de la sole d'une part, et des parois latérales d'autre part est également rendue plus aisée, ces deux éléments étant produits distinctement et potentiellement, via des procédés différents adaptés aux spécificités techniques de chacune de ces pièces. En d'autres termes, un four selon l'invention présente une meilleure efficacité opérationnelle.

Selon un mode de réalisation particulier, ladite sole comprend au moins une portion centrale adaptée pour former la surface inférieure de la chambre de fusion et une bride de liaison adaptée pour venir en appui-plan en-dessous desdites parois latérales.

La portion centrale est donc adaptée pour être au contact avec la partie inférieure du bain de verre, tandis que la bride de liaison, formée sur le pourtour de cette partie centrale, est adaptée pour servir de surface d'appui avec la partie inférieure des parois latérales, que cela soit par contact direct ou préférentiellement, par l'intermédiaire d'une portion circonférentielle de la sole.

Selon un mode de réalisation particulier, ladite bride de liaison forme un épaulement avec ladite partie centrale.

Un épaulement désigne un changement brusque de section formé à la base de la partie centrale de la sole.

Selon un mode de réalisation particulier, ladite sole comprend une portion circonférentielle qui présente une complémentarité de forme avec le pourtour de ladite portion centrale et est adaptée pour servir de base auxdites parois latérales d'une part, et être en appui-plan avec ladite bride de liaison d'autre part.

Une telle portion circonférentielle sert de socle (ou d'assise) aux parois latérales qui reposent dessus, et est préférentiellement solidaire d'une structure métallique extérieure du four. A noter que cette portion circonférentielle (5c) faisant partie de la sole, elle est elle-même de type water-jacket.

Une telle portion circonférentielle a pour avantage de favoriser la mise en oeuvre d'une liaison hermétique avec les parois latérales, avec lesquelles elle partage une liaison en appui-plan, qu'elle soit réversible ou irréversible, sur une surface relativement étendue. Les risques de fuite de gazs de combustion sont donc réduits à cet endroit.

Cette portion circonférentielle permet de plus de favoriser la mise en oeuvre d'une liaison hermétique avec la partie centrale de la sole, en raison de leur complémentarité de forme. Une telle liaison est notamment renforcée par la liaison appui-plan partagée avec la bride de liaison, qui est agencée en retrait par rapport au bain de verre, et est donc moins exposée à la chaleur émise par le bain de verre.

Selon un mode de réalisation particulier, ladite portion circonférentielle est adaptée pour être fixée à ladite bride de liaison de manière amovible, préférentiellement par une fixation de type vis-écrou.

Lors de la maintenance du four, il est ainsi possible de ne remplacer que la pièce défectueuse, l'autre pièce étant quant à elle réutilisable. La mise en oeuvre d'une telle fixation amovible permet donc d'améliorer l'efficacité opérationnelle de la sole métallique et plus généralement, celle du four.

Selon un mode de réalisation particulier, ladite installation comprend au moins un joint d'étanchéité aux gazs de combustion agencé à l'interface entre ladite portion circonférentielle et ladite bride de liaison.

Un tel joint d'étanchéité permet de limiter les risques de fuites de gazs depuis la chambre de fusion vers l'extérieur du four. Son agencement entre la portion circonférentielle et la bride de liaison de la sole est particulièrement avantageuse en ce que le joint est alors en retrait par rapport à la chambre de fusion et à la chaleur qu'elle produit. Les matériaux entrant dans la composition de ce joint d'étanchéité peuvent donc être sélectionnés comme ayant une moins bonne résistance thermique, au profit de meilleures propriétés d'étanchéification.

Selon un mode de réalisation préférentiel, ledit joint d'étanchéité est composé d'un type de silicone adapté pour résister à des températures élevées (quelques centaines de degrés).

Selon un mode de réalisation particulier, ladite sole métallique nue est adaptée pour être traversée par au moins un brûleur de type immergé et/ou un bouillonneur, qui sont fixés à la sole de manière amovible.

La sélection d'une sole de type water jacket permet de limiter la taille, le poids et le coût des éléments à fixer à la sole (brûleurs, blocs d'injecteurs de comburant). En effet, la sole water-jacket est moins épaisse que la sole réfractaire, d'un facteur 2 à 4. Les éléments fixés sous la sole, préférentiellement au moyens de vis, doivent la traverser pour être affleurant à sa partie supérieure sont donc moins volumineux, puisqu'ils ont une épaisseur moins grande à traverser. Ils sont donc moins lourds et également moins coûteux à fabriquer, compte de tenu des réductions de matière utilisée, et les simplifications de design.

Selon un mode de réalisation particulier, lesdites parois latérales en matériau réfractaire sont au moins en partie recouvertes sur leur pourtour d'un manteau métallique parcouru d'un réseau de conduites adaptées pour la circulation d'un fluide de refroidissement, préférentiellement de l'eau.

L'ajout de ce manteau métallique de type water-jacket, à l'extérieur du four, permet d'offrir un refroidissement supplémentaire des parois latérales en matériaux réfractaires et/ou de récupérer la chaleur émise au travers de ces dernières. Il permet de plus, dans certains modes de réalisation particuliers, de refroidir la zone de contact du joint d'étanchéité.

Selon un mode de réalisation particulier, ledit au moins un brûleur de type immergé comprend un bloc injecteur équipé d'un réseau de distribution de gazs de combustion et d'une pluralité d'injecteurs.

L'invention concerne également l'utilisation d'une telle installation, pour la fusion d'une composition de matières premières vitrifiables.

La combustion d'un combustible dans un four est obtenue grâce à la présence dans le four d'un comburant comprenant de l'oxygène. L'utilisation d'oxygène pur à plus de 99% est bien entendu une bonne solution à la réduction drastique de NOx puisqu'un tel comburant est quasi-exempt d'azote. Cependant, cet oxygène de haute qualité est particulièrement onéreux.

Selon un mode de réalisation particulier, le comburant gazeux utilisé comprend 90 à 96 % en mole d'oxygène et de l'azote. On utilise ainsi un oxygène industriel bien moins onéreux et contenant malgré tout un peu d'azote, dit oxygène « VPSA » (pour « Vacuum Pressure Swing Adsorption »). L'utilisation d'un tel mélange est avantageuse dès lors qu'elle est combinée avec un moyen permettant de réduire la température de combustion. En effet, en raison de sa faible concentration dans le four, le peu d'azote introduit avec le comburant ne produit pas ou peu de NOx à relativement basse température.

D'autres caractéristiques et avantages de l'invention apparaîtront à la lecture de la description suivante de modes de réalisation particuliers, donnés à titre de simples exemples illustratifs et non limitatifs, et des figures annexées, pour lesquelles :
[Fig. 1] la figure 1 est une vue schématique éclatée en coupe transversale d'une installation pour la fusion d'une composition de matières premières, selon un mode de réalisation particulier de l'invention,
[Fig. 2] la figure 2 est un agrandissement de la partie inférieure d'une installation telle que celle représentée sur la figure 1, en vue éclatée.
[Fig. 3] la figure 3 est un agrandissement de la partie inférieure d'une installation telle que celle représentée sur la figure 1, lorsque la sole 3 est agencée au fond du four.

Les différents éléments illustrés par les figures ne sont pas nécessairement représentés à l'échelle réelle, l'accent étant davantage porté sur la représentation du fonctionnement général de l'invention. Sur les différentes figures, sauf indication contraire, les numéros de référence qui sont identiques représentent des éléments similaires ou identiques.

Il est de plus entendu que la présente invention n'est nullement limitée par les modes de réalisation particuliers décrits et/ou représentés, et que d'autres modes de réalisation peuvent parfaitement être mis en oeuvre.

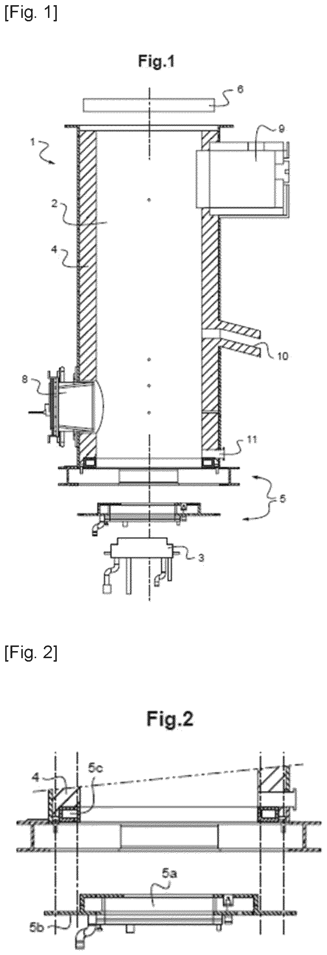

Les Figures 1 à 3 représentent tout ou partie d'une installation 1 (four) pour la fusion d'une composition de matières premières, et visent à en illustrer le fonctionnement général. Une telle installation 1 est adaptée à l'obtention de laine de verre et/ou de fils de verre textile. Elle comprend une chambre de fusion 2 de forme cylindrique orientée selon un axe vertical, et est délimitée par des parois latérales 4 et une voûte en matériaux réfractaires et une sole 5 métallique nue, de type water-jacket, traversée par un brûleur 3 de type immergé.

A des fins de clarté et de simplification, le four 1 illustré sur les figures 1 à 3 ne comprend qu'un unique brûleur 3, et pas de bouillonneur. Il va sans dire que la portée de l'invention n'est cependant en rien limitée par le nombre de brûleur/bouillonneur mis en oeuvre dans le four.

Le four 1 comprend en partie basse une bouche d'alimentation 8 en matières premières, localisée en-dessous du niveau théorique du bain de matières premières en fusion, également nommé bain de verre dans l'ensemble de la description. Les matières premières sont généralement amenées au sein de la chambre de fusion 2 au moyen d'une enfourneuse (non représentée).

Une fois dans le bain de verre, les matières premières sont fondues au moyen du brûleur 3 de type immergé, lui aussi agencé sous le niveau du bain de verre. Sur les figures 1 et 2, ce brûleur 3 se présente sous la forme d'un bloc injecteur équipé d'un réseau de distribution de gaz de combustion et d'une pluralité d'injecteurs. L'invention ne se limite cependant pas à la mise en oeuvre d'un tel type de brûleur qui peut, selon des modes de réalisations alternatifs, être par exemple de forme annulaire et/ou de type mono-injecteur.

Les gaz issus de la combustion des matières premières sont récupérés via une cheminée d'échappement 9 agencée en partie supérieure de la chambre de combustion 2. Le mélange fondu est extrait du four 1 par l'intermédiaire d'un déversoir 10, pour une étape subséquente de fibrage de laine de verre ou de filage de fils de verre textile. Une sortie d'urgence 11, localisée à la base de la chambre de fusion 2 ou alternativement dans la sole, permet de purger le four en cas de besoin.

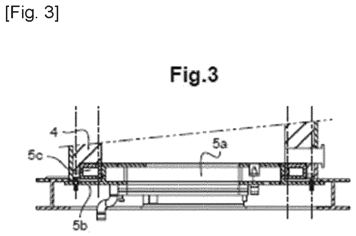

Les figures 2 et 3 sont un agrandissement de la partie inférieure de l'installation, et en particulier des liaisons existant entre les différentes constituantes de la sole 5 et les parois latérales 4 en matériau réfractaire.

Selon le mode de réalisation particulier illustré par les figures 2 et 3, la sole 5 comprend notamment une portion centrale 5a adaptée pour former la surface inférieure de la chambre de fusion 2 ou en d'autres termes, de former le fond de la cuve du bain de verre. Cette portion centrale 5a est en particulier traversée par le brûleur 3, fixé sur sa partie inférieure au moyens de vis. Une portion circonférentielle 5c métallique de la sole 3 sert de socle aux parois latérales 4 qui reposent dessus en appui-plan, tout en étant solidaire d'une structure métallique extérieure du four 1 (non représentée). Cette portion circonférentielle 5c présente de plus une complémentarité de forme avec le pourtour de la portion centrale 5a de la sole 5, de sorte que cette portion centrale 5a, lorsqu'elle est insérée à la base de la cuve 2, vient obturer la lumière centrale formée par les parois latérales 4, formant ainsi un fond de cuve hermétique, au moins au passage du verre fondu, tel qu'illustré par la figure 3. Une bride de liaison 5b forme un épaulement à la base de la portion centrale 5a et vient en appui-plan contre la partie inférieure de la portion circonférentielle 5c, renforçant ainsi l'étanchéité au gaz du fond de cuve, notamment au moyen d'un joint d'étanchéité (non représenté) agencé à l'interface entre ces deux éléments. Selon le mode de réalisation particulier illustré aux figures 1 à 3, la bride de liaison 5b est fixée de manière amovible à la portion circonférentielle 5c, au moyen d'une pluralité de vis.

Selon un mode de réalisation alternatif, non représenté sur les figures, la sole 3 ne comprend pas de portion circonférentielle 3c. La sole 3 est alors fixée directement à la partie inférieure des parois latérales 4, par contact plan-plan de la bride de liaison 5b avec la base des parois latérales, ou avec une plaque intermédiaire jouant le rôle de socle de ces dernières. Une telle fixation peut alternativement être de type réversible, ou irréversible.

Selon un mode de réalisation alternatif, non représenté sur les figures, la sole 3 comprend une portion circonférentielle 3c, mais cette dernière est fixée de manière amovible aux parois latérales 4, par exemple par l'intermédiaire plaque jouant le rôle de socle de ces parois latérales 4.

Afin d'évaluer le rôle joué par les matériaux constituant respectivement la sole 3 et les parois latérales 4, sur l'amélioration des performances énergétiques du four 1, un essai est simulé informatiquement via un modèle thermique pour un four ayant un fondoir de 1 m², pour 1 m de bain de verre sodo-calcique à 1200°C. La surface de parois contact verre est de 5 m².

Pour un premier échantillon, la totalité des parois du four, y inclus la sole, sont métalliques nues, de type water-jacket. Les pertes énergétiques aux parois en contact verre sont alors estimées à 500 kW.

Pour un deuxième échantillon, la totalité des parois du four, y inclus la sole, sont en matériaux réfractaires. Les pertes énergétiques aux parois en contact verre sont alors estimées à 50 kW.

On observe donc que les déperditions thermiques aux parois en contact verre sont dix fois plus importantes dans le cas de parois en water-jacket, en comparaison avec des parois en matériaux réfractaires.

Pour un troisième échantillon, représentatif d'un four selon l'invention, les parois latérales sont en matériaux réfractaires, tandis que la sole est métallique nue, de type water-jacket. Les pertes énergétiques aux parois en contact verre sont alors estimées à 140 kW.

En comparaison avec le premier échantillon, la mise en oeuvre du troisième échantillon, selon l'invention revendiquée, permet donc de limiter les déperditions thermiques et d'accroître significativement le rendement énergétique du four, pour une durée de vie acceptable, les soles en water-jacket étant bien plus résistantes à la corrosion par le verre que les soles en réfractaire.

## Revendications

1. Installation (1) pour la fusion d'une composition de matières premières, adaptée à l'obtention de laine de verre, de fils de verre textile et/ou de verre plat, qui comprend une chambre de fusion (2) équipée d'au moins un brûleur (3) de type immergé, **caractérisée en ce que** la chambre de fusion (2), préférentiellement de forme cylindrique, est définie par des parois latérales (4) en matériau réfractaire selon les normes ISO/R836 ou AFNOR NF B 40-001 et une sole (5) métallique nue à laquelle est fixé ledit brûleur (3) et qui est parcourue d'un réseau de conduites adaptées pour la circulation d'un fluide de refroidissement, préférentiellement de l'eau.

2. Installation (1) selon la revendication 1, **caractérisée en ce que** ladite sole (5) métallique est fixée de manière amovible auxdites parois latérales (4).

3. Installation (1) selon l'une des revendications 1 et 2, **caractérisée en ce que** ladite sole (5) comprend au moins une portion centrale (5a) adaptée pour former la surface inférieure de la chambre de fusion (2), et une bride de liaison (5b) adaptée pour venir en appui-plan en-dessous desdites parois latérales (4).

4. Installation (1) selon la revendication 3, **caractérisée en ce que** ladite bride de liaison (5b) forme un épaulement avec ladite partie centrale (5a).

5. Installation (1) selon l'une des revendications 3 et 4, **caractérisée en ce que** ladite sole (5) comprend une portion circonférentielle (5c) qui présente une complémentarité de forme avec le pourtour de ladite portion centrale (5a) et est adaptée pour servir de base auxdites parois latérales (4) d'une part, et être en appui-plan avec ladite bride de liaison (5b) d'autre part.

6. Installation (1) selon la revendication 5, **caractérisée en ce que** ladite portion circonférentielle (5c) est adaptée pour être fixée à ladite bride de liaison (5b) de manière amovible, préférentiellement par une fixation de type vis-écrou.

7. Installation (1) selon l'une des revendications 5 et 6, **caractérisée en ce qu'**elle comprend au moins un joint d'étanchéité aux gazs de combustion agencé à l'interface entre ladite portion circonférentielle (5c) et ladite bride de liaison (5b).

8. Installation (1) selon l'une des revendications 1 à 7, **caractérisée en ce que** ladite sole (5) métallique nue est adaptée pour être traversée par au moins un brûleur (3) de type immergé et/ou un bouillonneur, qui sont fixés à la sole (5) de manière amovible.

9. Installation (1) selon l'une des revendications 1 à 8, **caractérisée en ce que** lesdites parois latérales (4) en matériau réfractaire sont au moins en partie recouvertes sur leur pourtour d'un manteau métallique parcouru d'un réseau de conduites adaptées pour la circulation d'un fluide de refroidissement, préférentiellement de l'eau.

10. Installation (1) selon l'une des revendications 1 à 9, **caractérisée en ce que** ledit au moins un brûleur (3) de type immergé comprend un bloc injecteur équipé d'un réseau de distribution de gazs de combustion et d'une pluralité d'injecteurs.

11. Utilisation d'une installation (1) selon l'une des revendications 1 à 10 pour la fusion d'une composition de matières premières vitrifiables.
